# EUROPEAN PATENT SPECIFICATION

(11) **EP 0 722 636 B1**
(45) Date of publication and mention of the grant of the patent: **12.04.2006**
(21) Application number: 94927688.5
(22) Date of filing: 03.10.1994
(51) Int. Cl.: H04B 7/216, H04B 7/26

(54) **METHOD OF INCREASING SIGNAL QUALITY BY ADJUSTING THE SPREADING RATIO IN A CDMA CELLULAR RADIO SYSTEM**
VERFAHREN ZUR SIGNALQUALITÄTSVERBESSERUNG DURCH ANPASSUNG DER VERSPREIZUNGSRATIO IN EINER ZELLULAREN CDMA FUNKTELEFONANORDNUNG
PROCEDE D'AMELIORATION DE LA QUALITE DE SIGNAUX PAR AJUSTAGE DU RAPPORT D'ETALEMENT DANS UN SYSTEME CELLULAIRE DE RADIOTELEPHONIE DE TYPE AMDC

(30) Priority: 04.10.1993 FI 934353
(43) Date of publication of application: 24.07.1996
(73) Proprietor: Nokia Corporation, 02150 Espoo (FI)
(72) Inventor: KESKITALO, Ilkka, FIN-90940 Jääli (FI); KIEMA, Arto, FIN-24280 Salo (FI); SAVUSALO, Jari, FIN-90500 Oulu (FI); SIIRA, Anne, Farnborough, Hampshire GU14 8LY (GB); KÄRKKÄINEN, Ari, FIN-79999 Varkaus (FI); UOLA, Risto, FIN-90100 Oulu (FI); KÜHN, Ingo, FIN-90100 Oulu (FI); HOTTINEN, Ari, FIN-90100 Oulu (FI); JOLMA, Petri, FIN-90650 Oulu (FI)
(74) Representative: Brockman, Pertti Erik
(86) International application number: PCT/FI1994/000441
(87) International publication number: WO 1995/010145

(56) References cited:
- EP-A- 0 496 354
- EP-A- 0 594 325
- WO-A-94/03002
- WO-A-94/19876
- WO-A1-87/00370
- US-A- 4 984 247
- US-A- 5 335 249
- US-A- 5 341 396

## Description

The invention relates to a CDMA cellular radio system, comprising in each cell at least one base station connected to the mobile stations in the cell, in which system a data signal of each user generated with a given bit rate is multiplied by a spreading code generated with a bit rate considerably higher than the bit rate of the data signal, the ratio between the data signal and the spreading code forming the spreading ratio of the connection, and in which system signals multiplied by the spreading codes of several users are transmitted on the same frequency band.

CDMA is a multiple access method, which is based on the spread spectrum technique, and which has been applied recently in cellular radio systems, in addition to the prior FDMA and TDMA methods. CDMA has several advantages over the prior methods, for example spectral efficiency and the simplicity of frequency planning.

In FDMA, users are distinguished from one another by means of frequency; each data signal of the user has a dedicated frequency band. In TDMA, the frequency band is divided into successive time slots, and the data signal of each user is transmitted in its own recurrent time slot. In the case of combined FDMA/TDMA, several such frequency bands may be in use.

In CDMA, the narrow-band data signal of the user is modulated by a pseudorandom sequence, called the spreading code, having a broader band than the data signal. In connection with modulation, the signal spreads to a relatively wide band. In known test systems, bandwidths such as 1.25 MHz, 10 MHz and 50 MHz have been used. The spreading code consists of a number of bits. The bit rate of the spreading code is much higher than that of the data signal, and the bits of the spreading code are called chips to distinguish them from data bits and data symbols. Each data symbol of the user is multiplied by the chips of the spreading code. The narrow-band data signal thus spreads to the frequency band to be used. The ratio between the bit rate of the spreading code and the bit rate of the data signal is called the spreading ratio of the CDMA system.

Each user has a separate spreading code. The data signals of several users are transmitted simultaneously on the same frequency band. Correlators provided in the receivers are synchronized with a desired signal, which they recognize on the basis of the spreading code, and they restore the band of the signal to its original bandwidth. Signals arriving at the receiver and containing the wrong spreading code do not correlate in an ideal case, but retain their wide band and appear thus as noise in the receivers. The spreading codes used by the system are preferably selected in such a way that they are mutually orthogonal, i.e. they do not correlate with each other.

A typical feature of a cellular radio environment is that a signal propagating between a user and a base station does not propagate along a single straight path from the transmitter to the receiver but along several paths varying in length, depending on the properties of the environment. This kind of multipath propagation occurs even though there were direct line of sight between the base station and the mobile station. This multipath propagation is mainly due to the reflections of the signal from the surrounding surfaces. Signals propagating along different paths have different transmission delays, and so they differ in phase on arriving at the receiver.

Generally speaking, spreading codes are not orthogonal with all possible delay values. Signals with different delays therefore interfere with the detection of other signals. Users thus interfere with each other, and this is called multiple access interference. CDMA is an interference-limited system. The effect of multiple access interference increases with the number of system users, which degrades the signal-to-noise ratio of connections. In view of the capacity of the CDMA system, the optimum situation at the base station is when all signals arrive at the base station with the same signal-to-noise ratio. For this purpose, the CDMA system utilizes power control. The transmit power used by the mobile stations is controlled according to each situation. Thus, for example when a mobile station moves further away from the base station, it increases its transmit power so that the level of the signal received at the base station would not deteriorate.

There may, however, occur situations in the CDMA system where the deterioration of signal quality cannot be compensated for by power control. This occurs for example if the mobile station is already transmitting with its highest power. When the connection deteriorates, it is not possible to increase the power any more. Another such situation occurs when the mobile station is located at the border of the cell. Thus the signal it is transmitting interferes with the neighbouring cell, and an increase in power is disadvantageous to the entire system. In particular, if the system utilizes the so-called hard handover, i.e. the mobile station breaks its connection with the previous base station before a connection is established to the new base station, interference to the cell of the new base station is strong before the handover. In addition, if the traffic load in the cell is heavy, an increase in the transmit power of even one mobile station increases the amount of multiple access interference in the entire cell and may cause a break in the connections of other mobile stations.

Different interference elimination methods have been previously presented as a solution to the abovedescribed problem. In said methods the effect of the major interference is eliminated from the received signal by means of digital signal processing. However, these methods are very complicated and require intricate calculations. Therefore, no practical implementation has been presented so far.

US 4984247 and WO 87/00370 disclose spread spectrum systems.

The purpose of the present invention is to realize a cellular radio system, where it is possible to improve the quality of the connection between a mobile station and a base station without power control and interference elimination methods.

This is achieved in a cellular radio system according to the introduction, the system being characterized in that the spreading ratio of the connection between a base station and a mobile station is adjusted during the connection on the basis of signal quality by altering the bit rate of the spreading code.

The bit rate of the spreading code is thus much higher than the bit rate of the data signal. A typical bit rate of the data signal is for example 9.6 kbit/s. Correspondingly, the bit rate of the spreading code may be for example 1.228 Mbit/s. The spreading ratio at the aforementioned bit rates is 128, i.e. 21 dB.

The higher the spreading ratio of the CDMA system is, the better the system tolerates interference signals. In a system according to the invention, the spreading ratio of a connection can be altered, if necessary, and the quality of the connection may thus be improved without increasing the transmit power and the interference to other connections in the cell.

Thus, spreading ratio can be altered by increasing the data rate of the spreading code. In the latter case, the frequency band of the modulated signal will also be increased.

In the following, the invention will be described in greater detail with reference to the examples according to the accompanying drawings, in which
Figure 1 shows a part of a cellular radio system according to the invention,
Figure 2 shows a simplified example of a CDMA transmitter,
Figure 3 shows a simplified example of a CDMA receiver,
Figure 4 shows the form of the signals in different parts of the CDMA system, and
Figures 5 and 6 show the form of the signals in different parts of the CDMA system in two preferred embodiments.

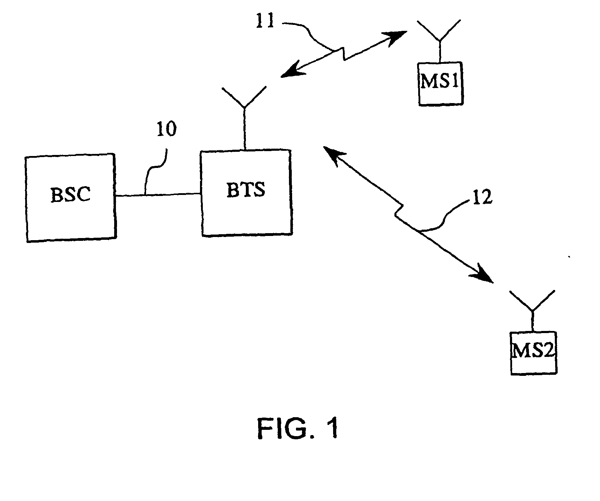

Figure 1 shows a part of a cellular network, where a base station BTS communicates with mobile stations MS1, MS2 in its area. The BTS is connected to a base station controller BSC by means of a digital transmission link 10, the base station controller being connected to other parts of the cellular network and to the fixed network. The mobile stations are located at different distances from the base station, and to minimize multiple access interference in the receiver of the base station the mobile stations adjust their transmit power according to control signals supplied by the base station. Mobile station MS1 located nearer to the base station uses, over the connection 11, a transmit power which is on average lower than the one mobile station MS2 further away is using over the connection 12. However, local variations may temporarily cause strong variations in signal powers.

When the mobile station MS2 is moving further away from the base station, it has to increase its power, since attenuation over the connection between the mobile station and the base station increases. Due to the propagation conditions of the signals, the mobile station may be in a situation where the quality of the connection is not adequate, even though the station transmitted with the highest permitted transmit power. The base station may use as a standard for the quality of the connection for example the received signal power, the signal-to-noise ratio or the bit error rate calculated from the received signal.

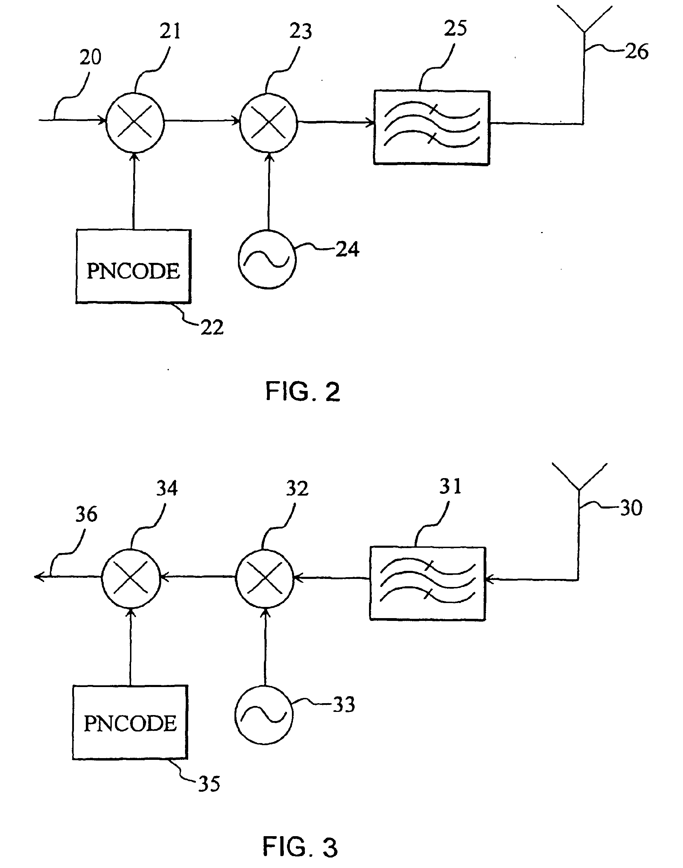

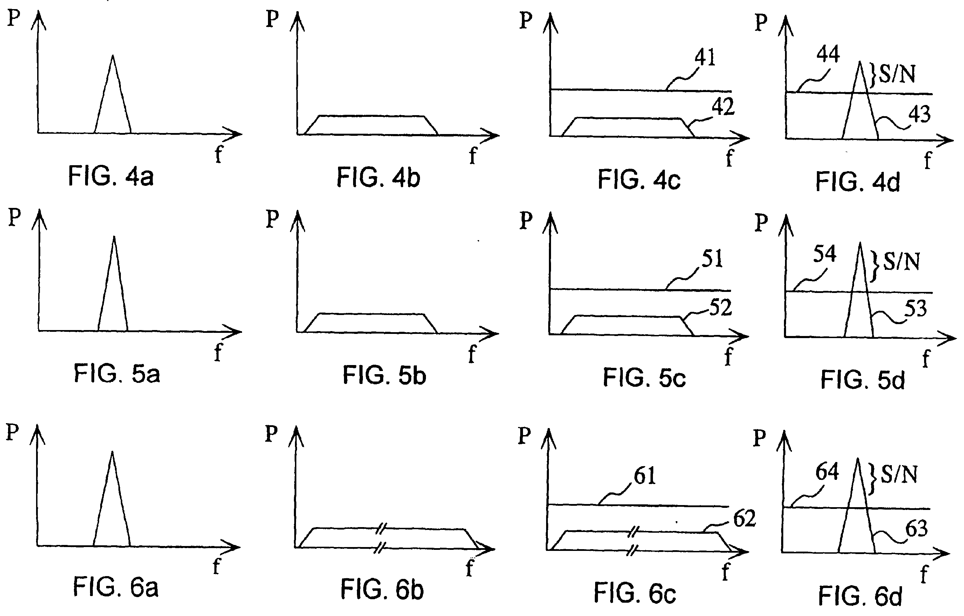

Figure 2 shows a simplified CDMA transmitter, and correspondingly Figure 3 shows a CDMA receiver. Figure 4 illustrates the forms of signals in the system. Assume that in the exemplary case the spreading ratio of the system is 100, i.e. 20 dB.

In the CDMA transmitter, a narrow-band data signal 20 of the user, as shown in Figure 4a, is modulated by the spreading code 22 of the connection in a multiplier 21. In the example, the bit rate of the spreading code is thus hundredfold compared to the data rate of the user. After this, the signal is multiplied 23 by a radio-frequency signal received from an oscillator 24, and after filtering 25, the wide-band signal of Figure 4b is supplied to an antenna 26. It must be noted that for the sake of clarity the wide-band signals in Figures 4, 5 and 6 are shown with considerably narrower bands than what they have in reality. Actually, with the spreading ratio of this example the difference in the bandwidths of the signals in Figures 4a and 4b is hundredfold.

In the CDMA receiver of Figure 3, an antenna 30 is receiving the signal of Figure 4c, comprising the transmitted wide-band signal 42, and interference and noise 41 present in the radio path. According to the CDMA method, the interference and the noise may be stronger than the desired signal. The difference between the interference and the desired signal may be for example 15 dB.

The received signal is supplied through a filter 31 first to a multiplier 32, where it is multiplied by a radio-frequency signal supplied from an oscillator 33. After this, the received signal is multiplied by the spreading code 35 of the connection in a multiplier 34. At this point, the signal has the form shown in Figure 4d, where the desired signal 43 has been restored, in connection with the multiplying, to its original narrow band, and the interference 44 has retained its wide band. The desired signal has a certain signal-to-noise ratio S/N, which in the example at the border of the cell may be 5 dB.

If the quality of the connection from the mobile station to the base station in the example is not adequate with said signal-to-noise ratio, the mobile station can alter the spreading ratio according to the invention to improve the interference tolerance of the connection. Assume that the spreading ratio is increased to 200, i.e. 23 dB. The increase in the original value is thus 3 dB.

In one example not according to the invention, the spreading ratio is increased by decreasing the bit rate of the data signal of the user. This can be achieved for example by introducing half rate in speech coding. The form of the signals is thus correspondingly similar to that in Figure 5. Figure 5a shows a narrow-band data signal of the user, and in Figure 5b it is modulated by the spreading code. Figure 5c shows the received signal, where the difference between the desired wide-band signal and the interference is still 15 dB. Figure 5d shows a demodulated signal, and it is apparent that the change of 3 dB in the spreading code is directly transferred to the signal-to-noise ratio of the received signal, which is now 8 dB. The level of the signal is thus better even though the transmit power remains the same. The quality of the speech may, however, be slightly poorer than when a higher user data rate is being utilized.

According to the invention, the spreading ratio can be increased by increasing the bit rate of the spreading code. It is not necessary to change or increase the spreading code as such, but the data bits of the user can be multiplied twice in succession by the same spreading code sequence. Correspondingly, the form of the signals is in this case similar to Figure 6. Figure 6a shows a narrow-band data signal of the user, and in Figure 6b it is modulated by the spreading code. The band of the modulated signal has now increased to twofold in the example. Figure 6c shows the received signal, where the difference between the desired wide-band signal and the interference is still 15 dB. Figure 6d shows a demodulated signal, and the change of 3 dB in the spreading ratio is also in this case directly transferred to the signal-to-noise ratio of the received signal.

The invention is described above by way of example so that the spreading ratio is altered in the signal transmitted by the mobile station. However, the adjustment of the spreading ratio is also applicable in a similar way in the signal transmitted by the base station.

The adjustment of the spreading ratio can be controlled either at the base station BTS, at the base station controller BSC or the like, or also at the mobile station MS2.

Even though the invention is described above with reference to the examples according to the accompanying drawings, it is clear that the invention is not limited thereto, but it can be modified in various ways within the scope of the inventive idea disclosed in the appended claims.

## Claims

1. A CDMA cellular radio system, comprising in each cell at least one base station (BTS) connected to the mobile stations (MS1, MS2) in the cell, in which system a data signal of each user generated with a given bit rate is multiplied by a spreading code generated with a bit rate considerably higher than the bit rate of the data signal, the ratio between the data signal and the spreading code forming the spreading ratio of the connection, and in which system signals multiplied by the spreading codes of several users are transmitted on the same frequency band, **characterized in that** the spreading ratio of the connection between a base station (BTS) and a mobile station (MS1, MS2) is adjusted during the connection on the basis of signal quality by altering the bit rate of the spreading code.

2. A system according to claim 1, **characterized in that** the spreading ratio of the connection between the base station (BTS) and the mobile station (MS1, MS2) is adjusted in the signal transmitted by the mobile station.

3. A system according to claim 1, **characterized in that** the spreading ratio of the connection between the base station (BTS) and the mobile station (MS1, MS2) is adjusted in the signal transmitted by the base station.

4. A system according to claim 1, **characterized in that** the spreading code of the connection between the base station (BTS) and the mobile station (MS1, MS2) is adjusted on the basis of the signal-to-noise ratio measured from the signal received at the base station.

5. A system according to claim 1, **characterized in that** the spreading ratio of the connection between the base station (BTS) and the mobile station (MS1, MS2) is adjusted on the basis of the bit error rate calculated from the signal received at the base station.

6. A system according to claim 1, **characterized in that** the adjustment of the spreading ratio of the connection between the base station (BTS) and the mobile station (MS1, MS2) is based on the signal power measured from the signal received at the base station.

7. A system according to claim 1, **characterized in that** the adjustment of the spreading ratio of the connection between the base station (BTS) and the mobile station (MS1, MS2) is controlled at the base station.

8. A system according to claim 1, **characterized in that** the adjustment of the spreading ratio of the connection between the base station (BTS) and the mobile station (MS1, MS2) is controlled at the base station controller (BSC).

9. A system according to claim 1, **characterized in that** the adjustment of the spreading ratio of the connection between the base station (BTS) and the mobile station (MS1, MS2) is controlled at the mobile station.

## Patentansprüche

1. Zellulares CDMA-Funksystem, welches in jeder Zelle zumindest eine Basisstation (BTS) aufweist, welche mit den Mobilstationen (MS1, MS2) in der Zelle verbunden ist, in welchem System ein mit einer gegebenen Bitrate generiertes Datensignal eines jeden Nutzers mit einem Spreizcode multipliziert wird, welcher mit einer Bitrate generiert ist, die höher als die Bitrate des Datensignals ist, wobei das Verhältnis zwischen dem Datensignal und dem Spreizcode das Spreizverhältnis der Verbindung bildet, und in welchem System mit den Spreizcodes multiplizierten Signale von verschiedenen Nutzern auf dem gleichen Frequenzband übertragen werden, **dadurch gekennzeichnet, dass** das Spreizverhältnis der Verbindung zwischen einer Basisstation (BTS) und einer Mobilstation (MS1, MS2) während der Verbindung auf Grundlage der Signalqualität durch Ändern der Bitrate des Spreizcodes eingestellt wird.

2. System nach Anspruch 1, **dadurch gekennzeichnet, dass** das Spreizverhältnis der Verbindung zwischen der Basisstation (BTS) und der Mobilstation (MS1, MS2) in dem von der Mobilstation übertragenen Signal eingestellt wird.

3. System nach Anspruch 1, **dadurch gekennzeichnet, dass** das Spreizverhältnis der Verbindung zwischen der Basisstation (BTS) und der Mobilstation (MS1, MS2) in dem von der Basisstation übertragenen Signal eingestellt wird.

4. System nach Anspruch 1, **dadurch gekennzeichnet, dass** der Spreizcode der Verbindung zwischen der Basisstation (BTS) und der Mobilstation (MS1, MS2) auf Grundlage des von dem an der Basisstation erhaltenen Signal gemessenen Signal-Rausch-Verhältnisses eingestellt wird.

5. System nach Anspruch 1, **dadurch gekennzeichnet, dass** das Spreizverhältnis der Verbindung zwischen der Basisstation (BTS) und der Mobilstation (MS1, MS2) auf Grundlage der von dem an der Basisstation erhaltenen Signal berechneten Bitfehlerrate eingestellt wird.

6. System nach Anspruch 1, **dadurch gekennzeichnet, dass** die Einstellung des Spreizverhältnisses der Verbindung zwischen der Basisstation (BTS) und der Mobilstation (MS1, MS2) auf der von dem an der Basisstation erhaltenen Signal gemessenen Signalleistung basiert.

7. System nach Anspruch 1, **dadurch gekennzeichnet, dass** die Einstellung des Spreizverhältnisses der Verbindung zwischen der Basisstation (BTS) und der Mobilstation (MS1, MS2) an der Basisstation gesteuert wird.

8. System nach Anspruch 1, **dadurch gekennzeichnet, dass** die Einstellung des Spreizverhältnisses der Verbindung zwischen der Basisstation (BTS) und der Mobilstation (MS1, MS2) an dem Basisstationskontrollrechner (BSC) gesteuert wird.

9. System nach Anspruch 1, **dadurch gekennzeichnet, dass** die Einstellung des Spreizverhältnisses der Verbindung zwischen der Basisstation (BTS) und der Mobilstation (MS1, MS2) an der Mobilstation gesteuert wird.

## Revendications

1. Système radiofréquentiel cellulaire de CDMA, comprenant dans chaque cellule au moins une station de base (BTS) reliée aux stations mobiles (MS1, MS2) dans la cellule, système dans lequel un signal de données de chaque utilisateur généré avec un débit binaire donné est multiplié par un code d'étalement généré avec un débit binaire considérablement plus élevé que le débit binaire du signal de données, le rapport entre le signal de données et le code d'étalement formant le taux d'étalement de la connexion, et dans lequel système des signaux multipliés par les codes d'étalement de plusieurs utilisateurs sont émis sur la même bande de fréquence, **caractérisé en ce que** le taux d'étalement de la connexion entre une station de base (BTS) et une station mobile (MS1, MS2) est ajusté durant la connexion sur la base de la qualité du signal en modifiant le débit binaire du code d'étalement.

2. Système selon la revendication 1, **caractérisé en ce que** le taux d'étalement de la connexion entre la station de base (BTS) et la station mobile (MS1, MS2) est ajusté dans le signal émis par la station mobile.

3. Système selon la revendication 1, **caractérisé en ce que** le taux d'étalement de la connexion entre la station de base (BTS) et la station mobile (MS1, MS2) est ajusté dans le signal émis par la station de base.

4. Système selon la revendication 1, **caractérisé en ce que** le code d'étalement de la connexion entre la station de base (BTS) et la station mobile (MS1, MS2) est ajusté sur la base du taux signal/bruit mesuré en provenance du signal reçu par la station de base.

5. Système selon la revendication 1, **caractérisé en ce que** le taux d'étalement de la connexion entre la station de base (BTS) et la station mobile (MS 1, MS2) est ajusté sur la base de la cadence d'erreur de bit calculée en provenance du signal reçu par la station de base.

6. Système selon la revendication 1, **caractérisé en ce que** le réglage du taux d'étalement de la connexion entre la station de base (BTS) et la station mobile (MS1, MS2) est basé sur la puissance du signal mesuré à partir du signal reçu par la station de base.

7. Système selon la revendication 1, **caractérisé en ce que** le réglage du taux d'étalement de la connexion entre la station de base (BTS) et la station mobile (MS1, MS2) est commandé à la station de base.

8. Système selon la revendication 1, **caractérisé en ce que** le réglage du taux d'étalement de la connexion entre la station de base (BTS) et la station mobile (MS1, MS2) est commandé par le contrôleur de la station de base (BSC).

9. Système selon la revendication 1, **caractérisé en ce que** le réglage du taux d'étalement de la connexion entre la station de base (BTS) et la station mobile (MS1, MS2) est commandé à la station mobile.
